# FASCICULE DE BREVET EUROPEEN

(11) **EP 3 634 842 B1**
(45) Date de publication et mention de la délivrance du brevet: **24.02.2021**
(21) Numéro de dépôt: 18729053.1
(22) Date de dépôt: 18.05.2018
(51) Int. Cl.: B62K 15/00, B62K 3/04

(54) **VELO PLIANT**
FALT-FAHRRAD
FOLDING BICYCLE

(30) Priorité: 19.05.2017 FR 1754460
(43) Date de publication de la demande: 15.04.2020
(73) Titulaire: Henry, Gilles, 75016 Paris (FR)
(72) Inventeur: Henry, Gilles, 75016 Paris (FR)
(74) Mandataire: Osha Liang
(86) Numéro de dépôt international: PCT/EP2018/063184
(87) Numéro de publication internationale: WO 2018/211104

(56) Documents cités:
- EP-A2- 2 409 906
- FR-A- 927 215
- US-A- 4 842 292
- US-A- 5 069 468

## Description

### DOMAINE TECHNIQUE

Le présent exposé concerne un vélo pliant, c'est-à-dire un vélo déformable entre une position dépliée dans laquelle le vélo est utilisable comme moyen de transport et une position pliée dans laquelle l'encombrement du vélo est moindre. Une fois plié, le vélo peut ainsi être rangé ou transporté plus facilement.

### ARRIERE PLAN

Il existe déjà de nombreux types de vélos pliants; voir, par exemple, les documents de brevet US 5069468 A et FR 927215 A. Cependant, la plupart des vélos de ce genre sont équipés de roues de petite taille, afin de réduire leur encombrement en position pliée. Ceci a pour inconvénient de réduire le confort et la stabilité du vélo lors de son utilisation.

Il existe néanmoins quelques vélos pliants de taille normale; on entend par là des vélos équipés de roues dont le diamètre est proportionné à la taille de l'utilisateur du vélo. Typiquement, selon les standards actuels, le diamètre de roue (plus précisément de pneu) recommandé pour un adulte de taille moyenne est compris entre 650 et 700 mm, i.e. entre 26 et 28 pouces. Cependant, la plupart de ces vélos sont en réalité davantage démontables que pliants, leur pliage nécessitant de désassembler tout ou partie du cadre et/ou de démonter une ou plusieurs roues. C'est le cas, par exemple, du vélo pliant objet du document de brevet US 4900047 ou du document de brevet EP 2114758B1.

Ces vélos ne sont donc pas satisfaisants car les opérations nécessaires à leur pliage sont complexes et leur cadre peut manquer de rigidité une fois assemblé.

Il existe donc un besoin pour un nouveau type de vélo pliant, de taille normale, dont les opérations de pliage et de dépliage soient simples et ne nécessitent pas de démonter une partie du cadre ou les roues du vélo.

### PRESENTATION GENERALE

L'invention concerne un vélo pliant selon les revendications indépendantes 1 et 2 annexées. Des modes de réalisation particuliers sont définis par les revendications dépendantes.

Un tel vélo pliant comprend une roue avant, une roue arrière et un cadre. Le cadre comprend une partie de cadre avant sur laquelle est montée la roue avant, par l'intermédiaire d'une fourche pivotante, et une partie de cadre arrière sur laquelle est montée la roue arrière. La partie de cadre avant comprend une barre supérieure, une barre de selle et une barre oblique. La barre de selle fait également partie de la partie de cadre arrière. La partie de cadre arrière peut comprendre au moins un hauban, au moins une barre inférieure et la barre de selle.

Selon un premier mode de réalisation, la barre oblique comprend une tige oblique supérieure et une tige oblique inférieure. La tige oblique inférieure, la tige oblique supérieure, la barre supérieure et la barre de selle sont reliées entre elles par des articulations, dans cet ordre, de manière à former un quadrilatère articulé déformable entre une position pliée et une position dépliée. Le quadrilatère articulé déformable est configuré de telle sorte que, en se déformant vers sa position pliée, le vélo se plie dans le sens de la longueur, les roues avant et arrière s'écartant transversalement l'une de l'autre tout en se rapprochant dans le sens de la longueur jusqu'à ce que la roue avant vienne se superposer à la roue arrière suivant une direction transversale du vélo.

Selon un deuxième mode de réalisation, la partie de cadre avant comprend une barre supérieure, une portion de la barre de selle, une barre de jonction et une barre oblique. La barre supérieure, la portion de la barre de selle, la barre de jonction et la barre oblique sont reliées entre elles, dans cet ordre, par des articulations de manière à former un quadrilatère articulé déformable entre une position pliée et une position dépliée. Le quadrilatère articulé déformable est configuré de telle sorte que, en se déformant vers sa position pliée, le vélo se plie dans le sens de la longueur, les roues avant et arrière s'écartant transversalement l'une de l'autre tout en se rapprochant dans le sens de la longueur jusqu'à ce que la roue avant vienne se superposer à la roue arrière suivant une direction transversale du vélo.

Ainsi, lorsque le vélo est en position pliée, la roue avant est superposée à la roue arrière suivant une direction transversale du vélo. En d'autres termes, la roue avant et la roue arrière sont disposées sensiblement l'une en face de l'autre suivant la direction transversale du vélo, étant entendu que ces roues peuvent être légèrement décalées l'une par rapport à l'autre suivant une direction perpendiculaire à la direction transversale, sans sortir du cadre de l'invention.

Dans le présent exposé, la longueur du vélo est considérée entre l'extrémité avant de la roue avant et l'extrémité arrière de la roue arrière du vélo. La direction longitudinale du vélo est la direction dans le sens de longueur du vélo. La direction longitudinale correspond donc à la direction avant-arrière du vélo lorsque celui-ci est en position dépliée, l'avant et l'arrière étant définis par rapport au sens de déplacement normal du vélo lorsque celui-ci est utilisé comme moyen de transport.

La hauteur du vélo est considérée suivant la verticale lorsque le vélo repose sur ses roues, en position dépliée, sur une surface horizontale.

On appelle "plan médian" du vélo le plan médian de la roue arrière du vélo. Lorsque le vélo est déplié et que ses roues avant et arrière sont alignées, les roues avant et arrière se trouvent dans le plan médian et l'axe longitudinal du vélo est contenu dans ce plan.

La direction transversale est la direction perpendiculaire au plan médian du vélo.

Le fait que les roues avant et arrière soient superposées en position pliée suivant la direction transversale permet de limiter l'encombrement du vélo en position pliée tout en conservant des roues de taille normale, i.e. de diamètre proportionné à la taille de l'utilisateur du vélo. Le confort et la stabilité du vélo lors de son utilisation en position dépliée sont ainsi préservés et, en position pliée, le vélo peut être rangé facilement (par exemple dans un appartement, une cave, sur un balcon, etc.) et transporté facilement (par exemple dans un coffre de voiture, dans les transports en commun, etc.).

En outre, la déformation du quadrilatère articulé étant possible sans avoir à démonter une partie du cadre ou une roue du vélo, le pliage du vélo se fait simplement et rapidement.

Ledit quadrilatère articulé est délimité par les quatre articulations précitées qui forment les quatre sommets du quadrilatère. Les quatre côtés du quadrilatère sont, quant à eux, formés par les éléments qui relient les articulations entre elles. Dans le premier mode de réalisation précité, les quatre côtés sont formés essentiellement par la tige oblique inférieure, la tige oblique supérieure, la barre supérieure et la barre de selle, respectivement. De même, dans le deuxième mode de réalisation précité, les quatre côtés sont formés essentiellement par la barre supérieure, la portion supérieure de la barre de selle, la barre de jonction et la barre oblique, respectivement. Les tiges et barres précitées sont généralement essentiellement rectilignes mais elles ne le sont pas nécessairement. La notion de quadrilatère ne doit donc, à cet égard, pas être interprétée au sens strict. Par exemple, ces tiges et barres peuvent être courbes ou en forme de lignes brisées sans sortir du cadre de l'invention.

Selon l'invention, les articulations sont des liaisons pivot. Ces liaisons structurellement simples permettent de guider en rotation les quatre côtés du quadrilatère articulé déformable en n'autorisant qu'une seule rotation autour de l'axe de la liaison. Le pliage du vélo est facilité par ce guidage. Le vélo peut ainsi être plié de manière souple, rapide et intuitive.

Selon l'invention, les articulations sont des liaisons pivot et les axes de ces liaisons sont sécants en un même point.

Dans d'autres exemples de vélos pliants ne faisant pas partie de l'invention, les axes des liaisons sont parallèles entre eux. Dans ce cas, les axes des liaisons sont de préférence inclinés d'un même angle par rapport à la direction transversale du vélo. Les axes des liaisons peuvent être horizontaux lorsque le vélo est déplié et repose sur une surface horizontale.

Dans certains modes de réalisation, la partie de cadre arrière est indéformable. Ceci permet d'améliorer la stabilité du vélo lors de son utilisation.

Dans certains modes de réalisation, le vélo comprend un système de verrouillage pour verrouiller le quadrilatère articulé dans sa position dépliée. En fonction de la configuration retenue pour le quadrilatère articulé, le système de verrouillage peut être prévu entre la tige oblique inférieure et la tige oblique supérieure, ou entre la portion de la barre de selle et la barre de jonction.

Le système de verrouillage peut comprendre, par exemple, une pince ou un collier de serrage maintenu par une vis, ou un système à crochet actionné par un levier. Dans certains modes de réalisation, le système de verrouillage comprend un pêne monté coulissant à l'intérieur d'une des tiges obliques, entre une position sortie et une position rétractée, et une gâche aménagée à l'intérieur de l'autre tige oblique et coopérant avec le pêne en position sortie pour empêcher la rotation relative des tiges obliques autour de l'articulation.

Dans certains modes de réalisation, l'une des tiges obliques présente un prolongement s'étendant axialement au-delà de l'articulation, tandis que l'autre tige présente une découpe dont la forme est complémentaire de celle du prolongement, et le pêne coulisse axialement à l'intérieur du prolongement. Cette configuration permet d'assurer un meilleur verrouillage du quadrilatère articulé dans sa position dépliée.

Dans certains modes de réalisation, le système de verrouillage comprend un levier de déverrouillage monté sur la même tige oblique que le pêne et coopérant avec le pêne pour entraîner celui-ci vers sa position rétractée, et ainsi autoriser la rotation des tiges obliques l'une par rapport à l'autre.

Dans certains modes de réalisation, le système de verrouillage comprend un verrou monté mobile dans ledit prolongement, entre une position de blocage du pêne et une position de déblocage du pêne. En référence à l'axe central de la tige oblique, le verrou est mobile en translation latéralement mais pas axialement. Un pion est prévu en face du verrou, sur face latérale de la découpe, de sorte que le pion vient appuyer sur le verrou pour débloquer le pêne lorsque les tiges obliques sont dépliées pour être alignées. Une telle configuration permet de débloquer le pêne, et ainsi de verrouiller le quadrilatère articulé, facilement et rapidement lors du dépliage du vélo.

Dans certains modes de réalisation, le vélo comprend un système de blocage pour bloquer le pédalier du vélo dans une position particulière lors du pliage ou du dépliage du vélo. En particulier, le pédalier peut comprendre un plateau de pédalier tournant autour d'un axe et le système de blocage peut comprendre un pion fixé sur la tige oblique inférieure à proximité du plateau; et une butée fixée sur la face intérieure du plateau. En position dépliée, le pion n'interfère pas avec la course de la butée et le plateau peut donc tourner librement autour de son axe. Lors du pliage, lorsque la tige oblique inférieure pivote par rapport à la barre de selle et se rapproche de celle-ci, le pion se rapproche de l'axe du plateau et coupe la course de la butée. Le plateau du pédalier ne peut alors plus tourner librement.

Les caractéristiques et avantages précités, ainsi que d'autres, apparaîtront à la lecture de la description détaillée qui suit, d'exemples de réalisation du vélo pliant proposé. Cette description détaillée fait référence aux dessins annexés.

### BREVE DESCRIPTION DES DESSINS

Les dessins annexés sont schématiques et ne sont pas à l'échelle, ils visent avant tout à illustrer les principes de l'invention.

Sur ces dessins, d'une figure (FIG) à l'autre, des éléments (ou parties d'élément) identiques sont repérés par les mêmes signes de référence.
La figure 1 est une vue de profil, schématique, d'un vélo classique selon l'art antérieur.
Les figures 2A à 2C sont des vues de profil, schématiques, de la séquence de pliage d'un exemple de vélo selon l'invention.
La figure 3 est une vue de dessus d'un autre exemple de vélo.
Les figures 4A à 4C illustrent, en perspective, la séquence de pliage du vélo de la figure 3.
La figure 5 illustre le vélo de la figure 3 en position pliée, vu de face selon la flèche V de la figure 4C.
Les figures 6A à 6D illustrent, en perspective, la séquence de pliage d'un exemple de vélo pliant selon l'invention.
Les figures 7A et 7B montrent, en vue de profil, un vélo dans une position repliée similaire à celles des figures 4C et 6D.
La figure 8 représente un exemple de système de verrouillage pour verrouiller un vélo dans sa position dépliée.
Les figures 9A à 9D illustrent, en perspective, la séquence de pliage d'un autre exemple de vélo pliant selon l'invention.
Les figures 10A à 10C représentent un deuxième exemple de système de verrouillage pour verrouiller un vélo dans sa position dépliée.
La figure 11 est une vue en perspective de ce deuxième exemple de système de verrouillage, en position déverrouillée.
Les figures 12A et 12B représentent en perspective le pédalier d'un vélo pliable et un système de blocage du pédalier, lorsque le vélo est en position dépliée et pliée, respectivement.
La figure 13 représente schématiquement, en vue de coté, le pédalier et le système de blocage des figures 12A et 12B.

### DESCRIPTION DETAILLEE D'EXEMPLES

Des exemples de réalisation sont décrits en détail ci-après, en référence aux dessins annexés. Ces exemples illustrent les caractéristiques et les avantages de l'invention. Il est toutefois rappelé que l'invention ne se limite pas à ces exemples.

Dans la présente demande, sauf précision contraire, les directions horizontale et verticale sont considérées en référence à la position dépliée du vélo lorsque celui-ci repose, dans des conditions normales d'utilisation, sur une surface horizontale. Le haut et le bas sont définis suivant la direction verticale. L'avant et l'arrière, la droite et la gauche, sont définis par rapport au sens de roulement normal du vélo.

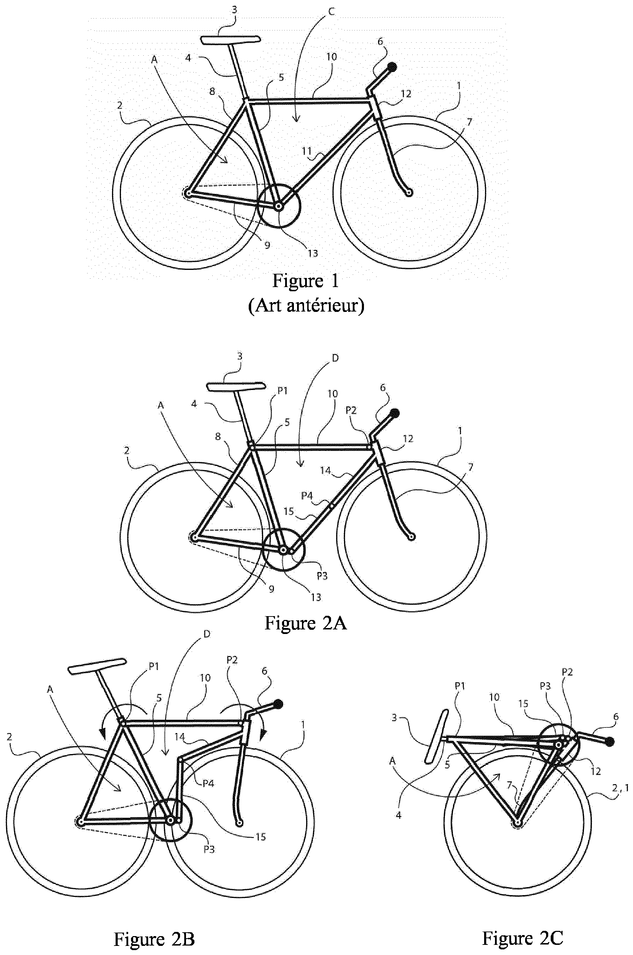

La figure 1 représente un vélo classique de taille normale pour adulte, vu de profil. Un tel vélo comporte, notamment :
- une roue avant 1 et une roue arrière 2 ;
- une selle 3 montée sur une tige de selle 4, elle-même montée sur une barre de selle 5;
- une fourche 7 montée pivotante sur le cadre du vélo et sur laquelle est fixée la roue avant 1, et
- un guidon 6 relié à la fourche 7 et permettant de fait pivoter celle-ci.

La barre de selle 5 est, typiquement, un tube à l'intérieur duquel la tige de selle 4 est montée coulissante, de sorte que la selle 3 puisse être réglée en hauteur.

En outre, le vélo comporte un cadre comprenant une partie de cadre arrière A (parfois appelée triangle arrière) et une partie de cadre avant C (parfois appelée triangle avant ou triangle central).

Le partie de cadre arrière A est formé par la barre de selle 5, au moins un hauban 8 et au moins une barre inférieure 9 (parfois appelée barre de chaîne). En général, sauf pour les modèles de vélo dits "monobras", le hauban 8 et la barre inférieure 9 sont doublés (i.e. il existe deux haubans et deux barres inférieures) et situés de part et d'autre de la roue arrière 2. Dans ce cas, les haubans gauche et droit sont respectivement notés 8g et 8d, et les barres inférieures gauche et droite sont respectivement notées 9g et 9d.

De même, la fourche 7, si elle n'est pas monobras, comporte un bras de fourche gauche 7g et un bras de fourche droit 7d.

Le partie de cadre avant C est formée par la barre de selle 5, une barre supérieure 10 (parfois appelée barre horizontale) et une barre oblique 11. Un tube de direction 12 est fixé sur la partie de cadre avant C, au niveau du sommet avant de cette partie. La fourche 7 et le guidon 6 pivotent à l'intérieur du tube de direction.

En outre, le vélo de la figure 1 est équipé d'un pédalier (non représenté) qui est fixé sur un boîtier de pédalier 13 dont l'axe est situé à l'intersection de la barre de selle 5, de la barre oblique 11 et de la ou des barres inférieures 9.

La figure 2A représente un exemple de vélo pliant selon l'invention, en position dépliée, vu de profil.

Sur ce vélo, par contraste avec le vélo de la figure 1, la partie de cadre avant est formée par un quadrilatère articulé D déformable, délimité par les articulations P1, P2, P3 et P4. Les quatre côtés ou segments de ce quadrilatère articulé D sont essentiellement formés par les éléments suivants :
- le barre de selle 5, qui relie les articulations P1 et P3 ;
- le barre horizontale 10, qui relie les articulations P1 et P2 ;
- une tige oblique supérieure 14, qui relie les articulations P2 et P4 ; et
- une tige oblique inférieur 15, qui relie les articulations P3 et P4.

Sur ce vélo, par contraste avec le vélo de la figure 1, la barre oblique est formée en deux parties articulées entre elles par l'articulation P4: la tige oblique supérieure 14 et la tige oblique inférieure 15.

Les barres et tiges 5, 10, 14, 15 qui forment les quatre côtés du quadrilatère articulé D sont rigides.

Dans l'exemple représenté, le tube de direction 12 fait partie intégrante de la tige oblique supérieure 14 et forme l'extrémité supérieure de celle-ci. L'articulation P2 relie ce tube de direction 12 à la barre horizontale 10. Le tube de direction 12 pourrait toutefois être relié différemment à la tige oblique supérieure 14 ou à la barre horizontale 10. Par exemple, le tube de direction peut faire partie intégrante de la barre horizontale 10 et former l'extrémité avant de celle-ci. Dans ce cas, l'articulation P2 peut relier le tube de direction 12 à la tige oblique supérieure 14.

L'articulation P3 se situe à proximité de l'axe du boîtier de pédalier 13 mais n'est pas nécessairement positionnée sur cet axe.

Le cadre du vélo de la figure 2 comprend ainsi une partie de cadre avant sur laquelle est montée la roue avant 1, par l'intermédiaire de la fourche pivotante 7, et une partie de cadre arrière A sur laquelle est montée la roue arrière 2.

La partie de cadre avant formant le quadrilatère articulé D comprend la barre supérieure 10, la barre de selle 5 et la barre oblique formée par la tige oblique inférieure 15 et la tige oblique supérieure 14. La partie de cadre arrière A comprend le ou les haubans 8, la ou les barres inférieures 9 et la barre de selle 5.

Dans sa position dépliée représentée sur la figure 2A, le quadrilatère articulé D a une forme proche du triangle. La tige oblique supérieure 14 et la tige oblique inférieure 15 sont sensiblement alignées et forment ensemble un côté dudit triangle.

Un quadrilatère articulé déformable relié par des articulations n'offrant qu'un seul degré de liberté en rotation (rotation seule ou conjuguée à une translation) offre l'avantage de pouvoir se plier et se déplier facilement sans avoir à déconnecter l'un de ses éléments.

En outre, il suffit de bloquer l'une des articulations pour que le quadrilatère devienne indéformable. Aussi, un système de verrouillage est prévu pour bloquer une des articulations et verrouiller le quadrilatère articulé dans sa position dépliée. Ainsi, en position dépliée, une fois que la partie de cadre avant est verrouillée, le vélo possède une rigidité sensiblement équivalente à celle d'un vélo classique comme celui de la figure 1.

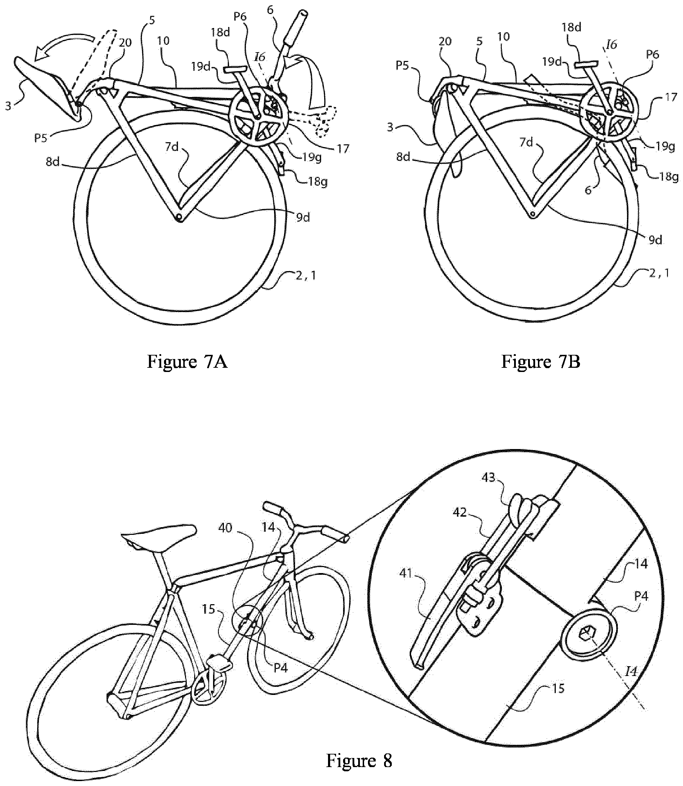

Un exemple de système de verrouillage 40 est représenté sur la figure 8. Ce système comprend un levier excentrique 41 fixé à la tige oblique inférieure 15, un anneau 42 passé autour du levier 41 et un crochet 43 fixé au tube oblique supérieur 14. Le crochet 43, l'anneau 42 et le levier 41 coopèrent de sorte que, lorsque l'anneau 42 est accroché sur le crochet 43, le pivotement du levier 41 met en tension l'anneau 42. Dans cet exemple, l'articulation P4, qui relie entre elles les tiges obliques supérieure 14 et inférieure 15, est située sur un côté des tiges 14, 15 lorsque celles-ci sont alignées. L'axe de pivotement I4 de l'articulation est orienté perpendiculairement et décalé par rapport à l'axe central des tiges 14 et 15. Le système de verrouillage est situé du côté opposé à l'articulation P4, par rapport à l'axe central des tiges 14 et 15. Lorsque ce système est verrouillé par mise en tension l'anneau 42, il empêche tout mouvement relatif entre les tiges 14, 15 et l'articulation P4 est bloquée; les tiges 14, 15 sont maintenues alignées entre elles, comme représenté sur la figure 8. Bien entendu, il ne s'agit que d'un exemple de système de verrouillage et d'autres systèmes pourraient être retenus.

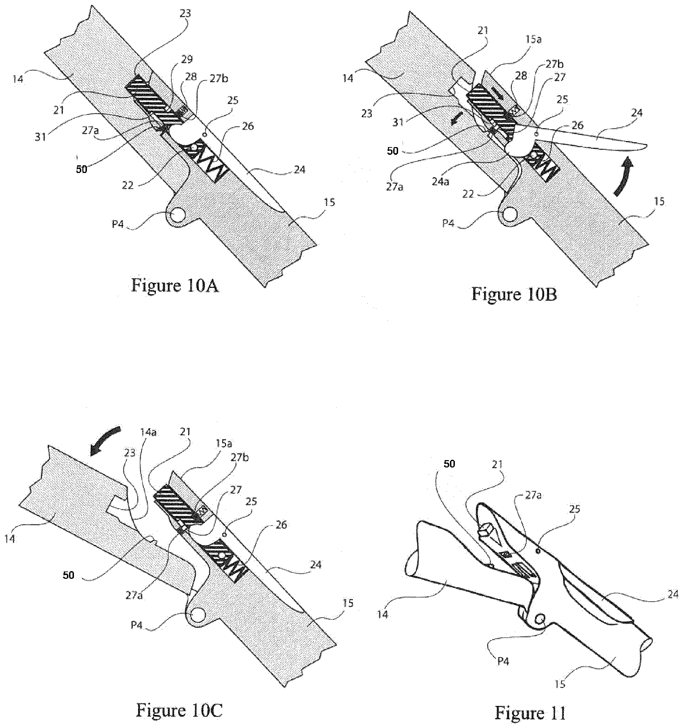

Les figures 10A à 10C et 11 représentent un autre exemple de système de verrouillage situé au niveau de l'articulation P4 qui relie entre elles les tiges obliques supérieure 14 et inférieure 15. Comme dans l'exemple de la figure 8, l'articulation P4 est située sur un côté des tiges 14, 15 lorsque celles-ci sont alignées. En d'autres termes, l'articulation P4 est décalée latéralement par rapport à l'axe central des tiges, lorsque le vélo est déplié. Dans la présente description du système de verrouillage, "axial" ou "axialement" renvoient à une direction parallèle à l'axe central des tiges 14, 15, lorsque le vélo est déplié, et "latéral" ou "latéralement" renvoient à une direction perpendiculaire à la direction axiale.

En référence aux figures 10 et 11, le système de verrouillage comprend:
- un pêne 21 monté coulissant à l'intérieur de la tige oblique inférieure 15, entre une position sortie et une position rétractée ;
- une gâche 23, aménagée à l'intérieur de la tige oblique supérieure 14, et coopérant avec le pêne 21 en position sortie pour bloquer l'articulation P4, i.e. pour empêcher la rotation relative des tiges obliques 14 et 15 autour de l'articulation P4 ; et
- un levier de déverrouillage 24 monté sur la tige oblique inférieure 15 et coopérant avec le pêne 21 pour entraîner celui-ci vers sa position rétractée et débloquer l'articulation P4, et ainsi autoriser la rotation des tiges obliques l'une par rapport à l'autre.

L'une des tiges, dans l'exemple la tige 15, présente un prolongement 15a s'étendant axialement au-delà de l'articulation P4, tandis que l'autre tige 14 présente une découpe 14a dont la forme est complémentaire de celle du prolongement 15a. Lors du dépliage du vélo, le prolongement 15a vient se loger dans la découpe 14a. Le pêne 21 est logé au moins en partie dans le prolongement 15a et coulisse axialement à l'intérieur de celui-ci, tandis que la gâche 23 est ménagée au niveau de la découpe 14a. En position sortie, le pêne 21 fait saillie à l'extrémité libre du prolongement 15a. Ainsi, la zone d'engagement du pêne 21 dans la gâche 23 est déportée axialement par rapport à l'articulation P4. Une telle configuration permet d'obtenir un meilleur verrouillage.

En position sortie, le pêne 21 est engagé ou enfoncé dans la gâche 23 (cf. figure 10A). Un ressort de compression 26 peut agir sur le pêne 21 pour le maintenir dans cette position enfoncée.

Un verrou 27 peut être monté dans la tige oblique inférieure 15 pour maintenir le pêne 21 dans sa position retractée (cf. figures 10B, 10C). Dans l'exemple des figures, le verrou 27 entoure au moins partiellement le pêne 21 de sorte qu'une première extrémité 27a du verrou se situe d'un côté du pêne 21 et que l'extrémité opposée du verrou, ou deuxième extrémité 27b, se situe de l'autre côté du pêne 21. Le verrou 27 est monté à l'intérieur du prolongement 15a de la tige 15 et est mobile en translation suivant une direction latérale. En revanche, le verrou 27 n'est pas mobile axialement. Une encoche 29 est ménagée dans une face latérale du pêne 21 pour recevoir la deuxième extrémité 27b du verrou 27. En position de blocage, la deuxième extrémité 27b du verrou est engagée dans l'encoche 29 de manière à bloquer le pêne 21 dans sa position rétractée, comme représenté sur la figure 10C. Pour ce faire, un ressort de compression 28 pousse le verrou 27 en direction du pêne 21, dans l'encoche 29. A l'inverse, en position de déblocage, le verrou 27 n'est plus engagé dans l'encoche 29, comme représenté sur la figure 10A.

Une rainure 31 peut être ménagée dans la face latérale du pêne 21 située à l'opposé de l'encoche 29 pour recevoir la première extrémité 27a du verrou. En position de déblocage, la première extrémité 27a du verrou est engagée dans la rainure 31, comme représenté sur la figure 10A, et cette extrémité 27a coulisse axialement dans la rainure 31 lorsque le pêne 21 coulisse. L'extrémité 27a sort de la rainure 31 lorsque la deuxième extrémité 27b pénètre dans l'encoche 29, et inversement. En outre, un pion 50 peut être prévu, en face de la première extrémité 27a, sur la face latérale de la découpe 14a de la tige oblique supérieure 14, de sorte que le pion 50 vient appuyer sur l'extrémité 27a pour la faire pénétrer dans la rainure 31, et pour que la deuxième extrémité 27b sorte de l'encoche 29, débloquant ainsi le pêne 21, lorsque le vélo est déplié.

Le levier 24 est monté pivotant sur la tige oblique inférieure 15 autour d'un axe 25 et coopère avec une butée 22 du peine 21. Ce levier 24 permet d'agir contre la force de rappel exercée par le ressort 26 sur le pêne 21. Pour effectuer le déverrouillage (figure 10B), l'utilisateur soulève le levier 24 qui agit sur la butée 22 pour faire coulisser le pêne 21 vers sa position rétractée et comprimer le ressort 26, jusqu'à ce que la deuxième extrémité 27b du verrou 27, sous l'effet du ressort 28, pénètre dans l'encoche 29. A ce stade, le pêne 21 est désengagé de la gâche 23 et maintenu dans cette position rétractée par le verrou 27.

Le levier 24 comporte également un ou plusieurs poussoirs 24a. Lors du déverrouillage, lorsque le levier 24 est soulevé, le ou les poussoirs 24a appuient sur la tige oblique supérieure 14, l'obligeant à s'écarter de la tige oblique inférieure 15 en pivotant autour de l'articulation P4. Ainsi, lorsque le levier 24 est soulevé et simultanément au coulissement du pêne 21, le pion 50 cesse d'appuyer sur la première extrémité 27a du verrou 27, ce qui rend possible le déplacement latéral du verrou 27 et permet à la deuxième extrémité 27b de s'engager dans l'encoche 29. Le verrou 27 maintient alors le pêne 21 dans sa position rétractée.

Pour poursuivre le pliage du vélo (Figure 10C), l'utilisateur peut lâcher le levier 24 et faire pivoter les tiges obliques 14 et 15 l'une par rapport à l'autre autour du pivot P4. Un dispositif de rappel (non représenté) peut être prévu pour permettre au levier 24 de revenir contre la tige oblique inférieure 15, comme représenté sur la figure 10A ou 10C.

Inversement, lors du dépliage du vélo, au moment où les tiges obliques 14 et 15 pivotent l'une par rapport à l'autre et atteignent la position relative illustrée sur la figure 10B, le pion 50 vient appuyer sur la première extrémité 27a du verrou. Il pousse alors le verrou 27, en agissant contre la force de rappel du ressort 28, ce qui fait sortir la deuxième extrémité 27b de l'encoche 29 et libère le pêne 21. Sous l'effet du ressort 26, le pêne 21 jaillit vers sa position sortie et peut s'engager à nouveau dans la gâche 23. Le vélo est ainsi verrouillé en position dépliée (Figure 10A).

La figure 11 est une vue en perspective du système de déverrouillage décrit ci-dessus, dans une position identique à celle de la figure 10C. Grâce à un tel système de déverrouillage, le vélo dispose d'un mécanisme simple permettant un déverrouillage facile du vélo, et un verrouillage automatique lors du dépliage.

Bien entendu, les formes des tiges 14 et 15 pourraient être inversées, i.e. le pêne 21 pourrait être monté sur la tige oblique supérieure 14 et la gâche 23 être ménagée dans la tige oblique inférieure 15.

Pour amorcer le pliage du vélo de la figure 2, une fois que le verrouillage du quadrilatère articulé D est désactivé, il suffit de basculer la partie arrière du vélo (comprenant notamment la partie de cadre arrière A et la roue arrière 2) vers l'avant, en la faisant pivoter autour de l'articulation P1, tout en basculant la partie avant du vélo (comprenant notamment la partie de cadre avant et la roue avant 1) vers l'arrière, comme illustré par les flèches arquées sur la figure 2B. Le quadrilatère articulé D prend alors une forme de pointe de flèche, comme représenté sur la figure 2B.

En position pliée (figure 2C), le quadrilatère articulé D atteint une forme presque aplatie, permettant à l'ensemble des éléments qui le composent de se replier sur un espace réduit, proche des roues, afin de limiter au maximum l'encombrement du vélo plié.

Comme représenté sur la figure 2C, les positions respectives des articulations P1, P2, P3 et P4 et les dimensions des barres et tiges 5, 10, 14, 15 sont adaptées pour que, dans cette position pliée, la roue avant 1 et la roue arrière 2 se superposent suivant la direction transversale du vélo. Cette configuration permet de limiter au maximum l'encombrement du vélo plié. Cela permet également à l'utilisateur de faire rouler le vélo plié sur le sol et, ainsi, de circuler avec le vélo plié sans avoir à le porter. Afin de faciliter cet usage, on pourra prévoir un autre système de verrouillage pour verrouiller le vélo dans sa position pliée. La selle 3 peut également être rétractée en position pliée, en faisant coulisser la tige de selle 4 à l'intérieur de la barre de selle 5 jusqu'à la position la plus basse (figure 2C).

On obtient ainsi un vélo de taille normale au pliage simple et fiable, ne nécessitant pas de démonter une partie du cadre ou une roue, ayant une structure rigide en position dépliée et offrant un faible encombrement en position pliée.

On notera toutefois que le pliage décrit en référence aux figures 2A à 2C ne serait pas possible si les articulations P1, P2, P3 étaient P4 des liaisons pivot situées dans un même plan, dont les axes seraient perpendiculaires au plan médian du vélo. En effet, dans ce cas, les roues avant 1 et arrière 2, qui sont alignées en position dépliée, viendraient buter l'une contre l'autre ainsi qu'avec certains éléments de structure (en particulier, la roue avant 1 viendrait buter contre la tige oblique inférieure 15) au moment du pliage.

Il est donc nécessaire de prévoir une configuration particulière pour les articulations P1, P2, P3 et P4 afin de permettre, lors du pliage, à la roue avant 1 de se décaler sur le côté (i.e. transversalement) par rapport à la roue arrière 2.

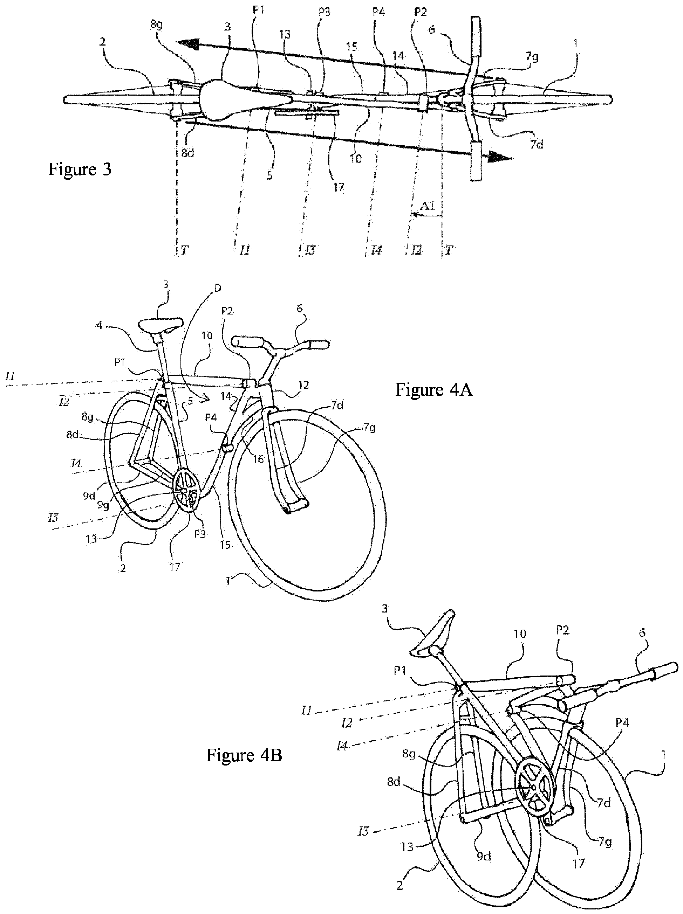

Selon une configuration possible mais ne faisant pas partie de l'invention, les articulations P1, P2, P3 et P4 sont des liaisons hélicoïdales, c'est-à-dire des liaisons offrant une mobilité selon des mouvements de rotation et de translation conjugués, dont les axes sont perpendiculaires au plan médian du vélo, et dont les sens de rotation ainsi que les pas respectifs sont calculés de sorte que, lors du pliage, le plan du cadre avant et de la roue avant 1 s'écarte transversalement de celui de la partie de cadre arrière A et de la roue arrière 2. D'autres configurations possibles, utilisant des articulations de structure plus simple et, généralement, plus robuste qu'une liaison hélicoïdale, sont décrites en référence aux figures 3 à 9D.

La figure 3 décrit un autre exemple de vélo, vu du dessus.

Dans cet exemple ne faisant pas partie de l'invention, les articulations P1, P2, P3 et P4 sont des liaisons pivot dont les axes, nommés respectivement I1, I2, I3 et I4, sont parallèles et inclinés d'un même angle A1 par rapport à la direction transversale T du vélo.

Dans l'exemple représenté, les axes I1, I2, I3 et I4 sont inclinés d'un angle A1 dans le sens des aiguilles d'une montre (en vue du dessus) ou vers l'arrière sur la partie droite du vélo.

Cette configuration permet, lors du pliage, si l'on considère la barre supérieure 10 comme fixe, de faire pivoter la partie avant du vélo, notamment la roue avant 1, vers l'arrière autour de l'articulation P2 en s'écartant transversalement, sur la gauche sur la figure 3, de la barre supérieure 10. A l'opposé, la partie arrière du vélo, notamment la roue arrière 2, pivote vers l'avant autour de l'articulation P1 en s'écartant transversalement, sur la droite sur la figure 3, de la barre supérieure 10. Les roues avant et arrière du vélo vont ainsi s'écarter transversalement l'une de l'autre tout en se rapprochant longitudinalement.

On notera que le vélo est équipé, en plus d'un boîtier de pédalier 13, d'un plateau 17 situé en général sur la droite du vélo.

En outre, dans cet exemple, le tube de direction 12 est relié fixement à la tige oblique supérieure 14, par l'intermédiaire d'un bras 16 permettant de déporter vers l'avant le tube de direction 12 par rapport à la tige oblique supérieure 14. Le tube de direction 12 pourrait toutefois être relié différemment à la tige oblique supérieure 14 ou à la barre horizontale 10 sans que ceci n'affecte le pliage ou le bon fonctionnement du vélo.

Les figures 4A à 4C illustrent en perspective la séquence de pliage du vélo selon cet exemple de réalisation.

Au cours du pliage (figure 4B), si l'angle A1 est suffisant, la roue avant 1 et la branche de fourche droite 7d évitent de toucher les autres parties du vélo et, en particulier, dans cet exemple, la roue arrière 2, le boîtier de pédalier 13, l'articulation P3, la barre de chaîne gauche 9g et le plateau 17 qui est situé sur le côté droit.

De même, la tige oblique inférieure 15, en pivotant autour de l'articulation P4, passe sur la droite de la roue avant 1, et en pivotant autour de l'articulation P3, passe sur la gauche de la barre de selle 5.

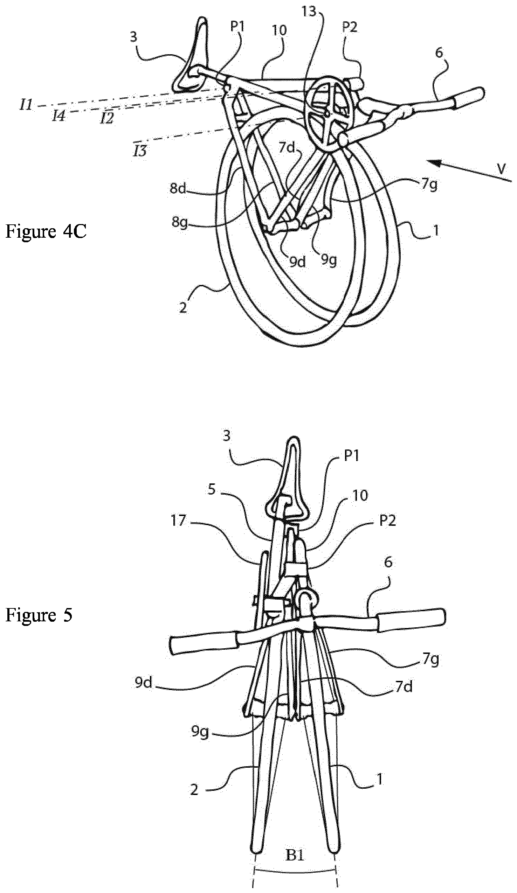

En position pliée (figure 4C), la roue avant 1 et la roue arrière 2 sont en vis-à-vis suivant la direction transversale. La branche de fourche droite 7d et la barre de chaîne gauche 9g sont à côté l'une de l'autre.

Comme illustré sur la figure 5, après avoir pivoté et compte tenu de la disposition des articulations P2 et P4, les roues avant 1 et arrière 2 ne sont pas parallèles en position pliée, mais inclinées l'une par rapport à l'autre selon un angle B1 qui dépend de la valeur de l'angle A1.

L'angle A1 peut donc être ajusté afin de permettre un pliage sans encombre (figure 4B), tout en optimisant l'écart final entre les roues (figures 4C et 5).

Sur les figures 4A à 4C, le pédalier du vélo n'est pas complet en ce sens que les pédales ne sont pas représentées. La présence des pédales et, dans l'exemple, de la pédale gauche, peut cependant être prise en compte pour ajuster l'angle A1. Selon une variante, la pédale en question peut être placée dans une position particulière avant de plier le vélo pour gêner le moins possible le passage de la roue avant 1 et de la branche de fourche droite 7d. Selon une autre variante, la pédale en question peut être démontable. Cette dernière variante, bien qu'acceptable, n'est pas pleinement satisfaisante car elle exige des manipulations supplémentaires lors du pliage du vélo.

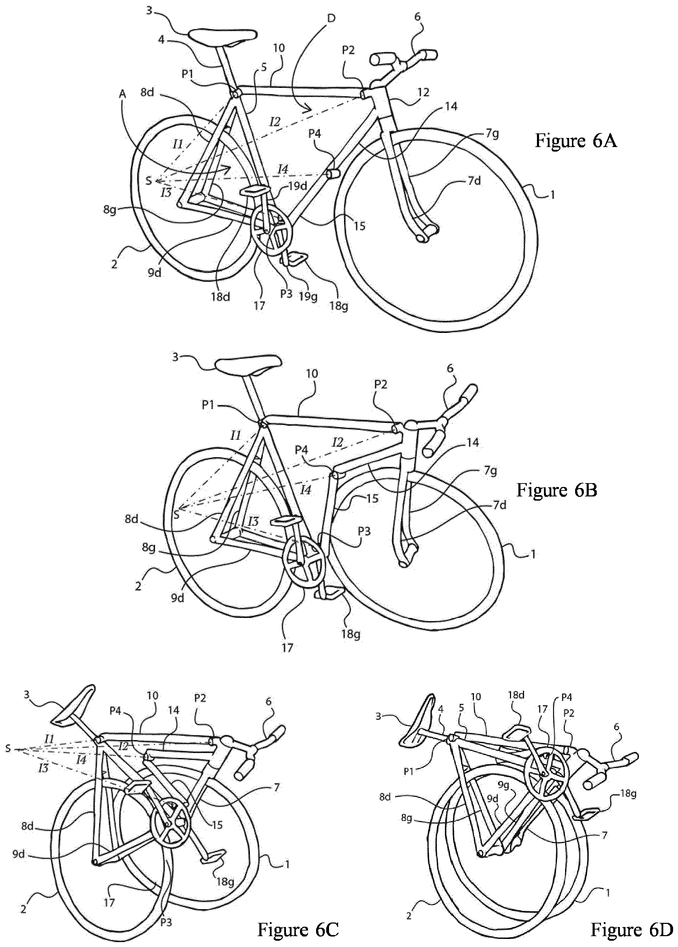

Les figures 6A à 6D sont des vues en perspective d'un exemple de réalisation du vélo selon l'invention.

Cet exemple diffère de celui des figures 4A à 5 en ce que les axes I1, I2, I3, I4 des articulations P1, P2, P3 et P4 ne sont pas parallèles, mais sécants. Ils convergent en un point S qui est situé dans un plan différent et éloigné transversalement du plan médian du vélo.

Dans l'exemple des figures 6A et suivantes, on a placé le point S sur la droite du vélo mais on pourrait également envisager de le placer sur sa gauche.

Une telle configuration permet au quadrilatère déformable D de se replier aussi facilement que dans les autres exemples de réalisation et, si le point S est suffisamment écarté transversalement du plan médian du vélo, l'ensemble dispose d'une rigidité suffisante en position dépliée, une fois que l'une des articulations (par exemple, l'articulation P4) est bloquée en rotation par un dispositif de verrouillage (non représenté). En effet, le volume formé par les articulations P1, P2, P3, P4 et le point S est alors une pyramide stable.

Pour cet exemple de réalisation, on a représenté sur les figures le pédalier complet du vélo, comportant :
- une pédale gauche 18g montée pivotante sur une manivelle gauche 19g, elle-même fixée au boîtier de pédalier 13 ;
- une pédale droite 18d montée pivotante sur une manivelle droite 19d, également fixée au boîtier de pédalier 13.

Les figures 6A à 6D illustrent la cinématique de pliage complète du vélo.

Au début du pliage (figure 6B), grâce à l'angle qui existe entre les axes I1, I2, I3 et I4, la roue avant 1 pivote vers l'arrière en s'écartant simultanément vers la gauche du vélo. Le bord de la roue avant 1 évite ainsi de toucher la pédale gauche 18g ou la tige oblique inférieure 15.

Lorsque le pliage du vélo continue (figures 6C et 6D), la roue avant 1 et la branche de fourche droite 7d contournent la pédale gauche 18g et la manivelle gauche 19g.

En position pliée, la roue avant 1 vient se positionner à proximité et en vis-à-vis de la roue arrière 2 suivant la direction transversale, en donnant au vélo une configuration et un volume similaires à ceux de l'exemple de réalisation de la figure 4C. Cette solution présente l'avantage de ne pas avoir à positionner le pédalier dans une position particulière ou à démonter le pédalier avant le pliage.

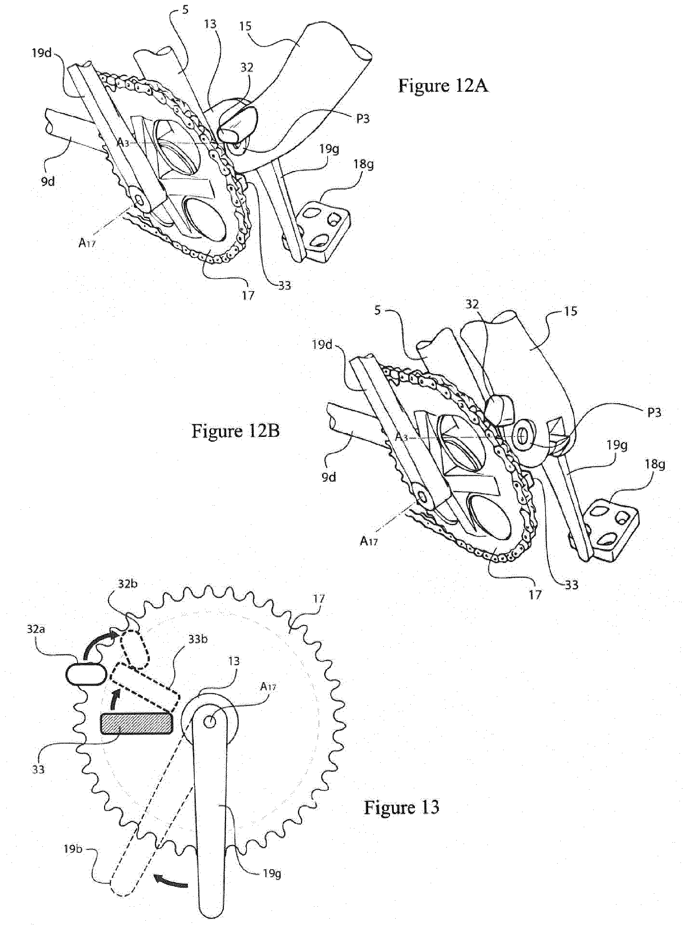

Toutefois, un système peut être prévu pour réduire au maximum le risque d'interférence entre une pédale, ici la pédale gauche 18g, et une autre partie du vélo lors des opérations de pliage et de dépliage. Ainsi, le vélo peut comprendre un système permettant, au cours des opérations de pliage et de dépliage, de bloquer le pédalier dans une position particulière. En particulier, une des pédales, ici la pédale gauche 18g, peut être maintenue ou bloquée en position basse (par rapport au vélo en position dépliée), c'est-à-dire dans une position où la manivelle gauche 19g est dans une position sensiblement verticale et orientée vers le bas, tel qu'illustré sur les figures 6A, 6B, 12A, 12B. En effet, lorsque la manivelle gauche 19g est orientée vers l'avant du vélo, vers l'arrière ou vers le haut, il peut exister, dans certaines configurations, un risque de voir la pédale gauche 18g interférer avec les rayons ou la jante de la roue avant 1. Les figures 12A et 12B sont des vues en perspective d'un exemple de système de blocage du pédalier. Le système de blocage comprend:
- un pion 32, fixé sur la tige oblique inférieure 15, à proximité du plateau 17; et
- une butée 33, fixée sur la face intérieure du plateau 17.

Le pion 32 s'étend dans une direction sensiblement perpendiculaire au plan médian du vélo, sans toutefois toucher le plateau 17. La butée 33 et le pion 32 sont respectivement montés fixes sur le plateau 17 et la tige 15.

Lors du pliage du vélo (figure 12B), la tige oblique inférieure 15 pivote autour de l'axe A3 de l'articulation P3, et se rapproche de la barre de selle 5.

La figure 13 illustre schématiquement le fonctionnement de ce mécanisme, en vue latérale gauche.

En position dépliée, c'est-à-dire en position d'utilisation du vélo, le pion de pédalier 32 se trouve dans une position 32a qui n'interfère pas avec la course de la butée 33. Le pédalier peut donc tourner librement autour de son axe A17.

Dès le début du pliage, lorsque la tige oblique inférieure 15 pivote autour de l'axe A3, le pion 32 se rapproche de l'axe A17, et coupe la course de la butée 33, i.e. lorsque le plateau tourne, la butée 33 vient contre le pion 32 et est bloquée dans son mouvement. En position pliée, le pion 32 se trouve dans la position 32b, représentée en pointillés sur la figure 13, et le pédalier ne peut plus désormais tourner au-delà de la position 33b de la butée 33 également représentée en pointillés. La rotation de la manivelle gauche 19g est donc limitée à un petit secteur angulaire. Au maximum, la manivelle 19g peut atteindre la position 19b en pointillés sur la figure 13.

Un tel système de blocage permet d'éviter toute interférence de la pédale 18g avec une autre partie du vélo lors des opérations de pliage et de dépliage, sans intervention manuelle préalable sur le pédalier du vélo et, en particulier, sans avoir à démonter ou replier la pédale 18g ou la manivelle 19g. Tout au plus il peut être recommandé à l'utilisateur, préalablement au pliage, de vérifier que la pédale 18g est en position basse, et dans le cas contraire, de faire tourner celle-ci avec le pied jusqu'à atteindre une position adéquate.

Afin de réduire encore l'encombrement du vélo plié, on peut prévoir des dispositifs complémentaires permettant de replier la selle 3 et le guidon 6.

La figure 7A montre en vue de profil de droite le vélo replié, dans une configuration similaire à celle des figures 4C et 6D.

La selle 3 est montée pivotante sur un support de selle 20, et pivote autour d'une articulation P5 formée par une liaison pivot dont l'axe est perpendiculaire à celui du plan médian du vélo.

Le guidon 6 dispose également d'une articulation P6 dont l'axe I6 est oblique, afin de permettre au guidon 6 de basculer sur le côté gauche du vélo, pour ne pas être gêné par le plateau 17.

En position totalement pliée (figure 7B), le guidon 6 est replié dans un plan sensiblement parallèle à celui de la roue avant 1. La selle 3 peut quant à elle être positionnée entre les roues avant 1 et arrière 2, en faisant tourner si nécessaire la tige de selle 4 à l'intérieur de la barre de selle 5. La selle 3 et le guidon 6 sont ainsi repliés à l'intérieur du volume délimité par les roues avant 1 et arrière 2.

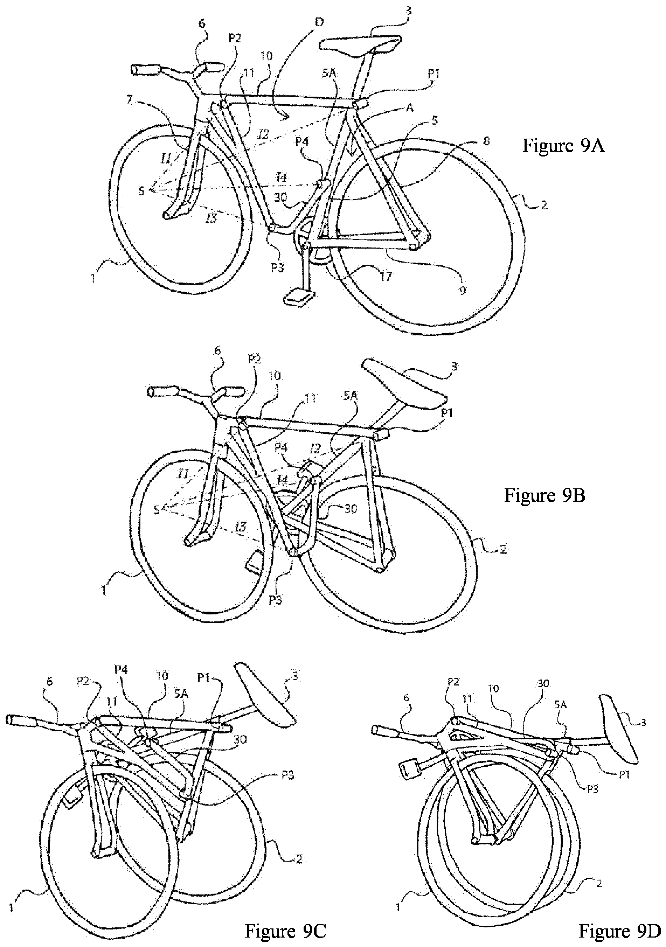

Les figures 9A à 9D illustrent, en perspective, la séquence de pliage d'un autre exemple de vélo pliant selon l'invention comprenant une roue avant 1, une roue arrière 2 et un cadre. Le cadre comprend une partie de cadre avant sur laquelle est montée la roue avant 1, par l'intermédiaire d'une fourche pivotante 7, et une partie de cadre arrière A sur laquelle est montée la roue arrière 2,

La partie de cadre arrière A comprend au moins un hauban 8, au moins une barre inférieure 9 et une barre de selle 5. La partie de cadre avant comprend une barre supérieure 10, une portion supérieure 5A de la barre de selle 5, une barre de jonction 30 et une barre oblique 11.

La portion supérieure 5A de la barre de selle, la barre supérieure 10, la barre oblique 11 et la barre de jonction 30 sont reliées entre elles, dans cet ordre, par des articulations P1 à P4 de manière à former un quadrilatère articulé D déformable entre une position pliée et une position dépliée. Le quadrilatère articulé D est configuré de telle sorte que, en se déformant vers sa position pliée, le vélo peut être plié dans le sens de la longueur jusqu'à ce que la roue avant 1 vienne se superposer à la roue arrière 2 suivant une direction transversale du vélo.

Cet exemple de vélo diffère donc de celui des figures précédentes en ce que son cadre comprend un élément de structure supplémentaire, à savoir la barre de jonction 30, et en ce que la barre oblique 11 n'est pas formée d'une tige oblique inférieure et d'une tige oblique supérieure articulées entre elles. L'articulation P4 est au contraire prévue sur la barre de selle 5 pour relier la portion supérieure 5A de la barre de selle à la barre de jonction 30. Les explications données pour les exemples précédents, relatives à la configuration des articulations et, plus généralement, du quadrilatère articulé D restent néanmoins valables. Ces explications ne sont donc pas répétées ici par souci de concision.

Les modes ou exemples de réalisation décrits dans le présent exposé sont donnés à titre illustratif et non limitatif, une personne du métier pouvant facilement, au vu de cet exposé, modifier ces modes ou exemples de réalisation, ou en envisager d'autres, tout en restant dans la portée de l'invention définie par les revendications annexées.

## Revendications

1. Vélo pliant comprenant une roue avant (1), une roue arrière (2) et un cadre dans lequel,
le cadre comprend une partie de cadre avant sur laquelle est montée la roue avant, par l'intermédiaire d'une fourche (7) pivotante, et une partie de cadre arrière (A) sur laquelle est montée la roue arrière,
la partie de cadre avant comprend une barre supérieure (10), une barre de selle (5) et une barre oblique (11),
la partie de cadre arrière comprend au moins un hauban (8), au moins une barre inférieure (9) et la barre de selle (5), et dans lequel,
la barre oblique (11) comprend une tige oblique supérieure (14) et une tige oblique inférieure (15),
la tige oblique inférieure (15), la tige oblique supérieure (14), la barre supérieure (10) et la barre de selle (5) sont reliées entre elles par des articulations (P1, P2, P3, P4), dans cet ordre, de manière à former un quadrilatère articulé (D) déformable entre une position pliée et une position dépliée,
le quadrilatère articulé (D) est configuré de telle sorte que, en se déformant vers sa position pliée, le vélo se plie dans le sens de la longueur, les roues avant et arrière s'écartant transversalement l'une de l'autre tout en se rapprochant dans le sens de la longueur jusqu'à ce que la roue avant (1) vienne se superposer à la roue arrière (2) suivant une direction transversale du vélo, et
les articulations (P1, P2, P3, P4) sont des liaisons pivot et les axes (I1, I2, I3, I4) de ces liaisons sont sécants en un même point.

2. Vélo pliant comprenant une roue avant (1), une roue arrière (2) et un cadre dans lequel,
le cadre comprend une partie de cadre avant sur laquelle est montée la roue avant, par l'intermédiaire d'une fourche (7) pivotante, et une partie de cadre arrière (A) sur laquelle est montée la roue arrière,
la partie de cadre arrière comprenant au moins un hauban (8), au moins une barre inférieure (9) et une barre de selle (5),
et dans lequel,
la partie de cadre avant comprend une barre supérieure (10), une portion supérieure (5A) de la barre de selle (5), une barre de jonction (30) et une barre oblique (11),
la barre supérieure (10), la portion supérieure (5A) de la barre de selle (5), la barre de jonction (30) et la barre oblique (11) sont reliées entre elles par des articulations (P1, P2, P3, P4), dans cet ordre, de manière à former un quadrilatère articulé (D) déformable entre une position pliée et une position dépliée,
le quadrilatère articulé (D) déformable est configuré de telle sorte que, en se déformant vers sa position pliée, le vélo se plie dans le sens de la longueur, les roues avant et arrière s'écartant transversalement l'une de l'autre tout en se rapprochant dans le sens de la longueur jusqu'à ce que la roue avant (1) vienne se superposer à la roue arrière (2) suivant une direction transversale du vélo, et
les articulations (P1, P2, P3, P4) sont des liaisons pivot et les axes (I1, I2, I3, I4) de ces liaisons sont sécants en un même point.

3. Vélo pliant selon la revendication 1 ou 2, dans lequel les articulations (P1, P2, P3, P4) sont des liaisons pivot et les axes (I1, I2, I3, I4) de ces liaisons convergent en un point (S) éloigné transversalement du plan médian du vélo.

4. Vélo pliant selon l'une quelconque des revendications 1 à 3, dans lequel la partie de cadre arrière (A) est indéformable.

5. Vélo pliant selon l'une quelconque des revendications 1 à 4, comprenant un système de verrouillage pour verrouiller le quadrilatère articulé (D) dans sa position dépliée.

6. Vélo pliant selon la revendication 5, dans lequel le système de verrouillage est prévu entre la tige oblique inférieure (15) et la tige oblique supérieure (14), ou entre la portion supérieure (5A) de la barre de selle et la barre de jonction (30).

7. Vélo pliant selon la revendication 5 ou 6, dans lequel le système de verrouillage comprend:
un pêne (21) monté coulissant à l'intérieur d'une des tiges obliques (15), entre une position sortie et une position rétractée;
une gâche (23) aménagée à l'intérieur de l'autre tige oblique (14) et coopérant avec le pêne (21) en position sortie pour empêcher la rotation relative des tiges obliques (14, 15) autour de l'articulation (P4).

8. Vélo pliant selon la revendication 7, dans lequel l'une des tiges obliques (15) présente un prolongement (15a) s'étendant axialement au-delà de l'articulation (P4), tandis que l'autre tige (14) présente une découpe (14a) dont la forme est complémentaire de celle du prolongement (15a), et dans lequel le pêne (21) coulisse axialement à l'intérieur du prolongement (15a).

9. Vélo pliant selon la revendication 7 ou 8, dans lequel le système de verrouillage comprend un levier de déverrouillage (24) monté sur la même tige oblique (15) que le pêne (21) et coopérant avec le pêne (21) pour entraîner celui-ci vers sa position rétractée, et ainsi autoriser la rotation des tiges obliques (14, 15) l'une par rapport à l'autre.

10. Vélo pliant selon la revendication 8 ou 9, comprenant un verrou (27) monté mobile dans ledit prolongement (15a) entre une position de blocage du pêne (21) et une position de déblocage du pêne (21), le verrou (27) étant mobile en translation latéralement mais pas axialement, dans lequel un pion (50) est prévu en face du verrou (27), sur face latérale de la découpe (14a), de sorte que le pion (50) vient appuyer sur le verrou (27) pour débloquer le pêne (21) lorsque les tiges obliques (14, 15) sont dépliées pour être alignées.

11. Vélo pliant selon l'une quelconque des revendications 1 à 10 comprenant un système de blocage pour bloquer le pédalier du vélo dans une position particulière lors du pliage ou du dépliage du vélo.

12. Vélo pliant selon la revendication 11, dans lequel le pédalier comprend un plateau (17) de pédalier tournant autour d'un axe (A17) et dans lequel le système de blocage comprend:
un pion (32) fixé sur la tige oblique inférieure (15) à proximité du plateau (17); et
une butée (33) fixée sur la face intérieure du plateau (17),
dans lequel le pion est positionné pour, en position dépliée, ne pas interférer avec la course de la butée (33) de sorte que le plateau (17) peut tourner librement autour de son axe (A17) et, lors du pliage, lorsque la tige oblique inférieure (15) pivote par rapport à la barre de selle (5) et se rapproche de celle-ci, le pion (32) se rapproche de l'axe (A17) du plateau (17) et coupe la course de la butée (33) de sorte que le plateau (17) ne peut plus tourner librement.

13. Vélo pliant selon l'une quelconque des revendications 1 à 12 dans lequel les tiges et barres sont essentiellement rectilignes, courbes ou en forme de lignes brisées.

## Patentansprüche

1. Klappfahrrad mit einem Vorderrad (1), einem Hinterrad (2) und einem Rahmen, wobei
der Rahmen einen vorderen Rahmenteil, an dem das Vorderrad über eine Schwenkgabel (7) montiert ist, und einen hinteren Rahmenteil (A), an dem das Hinterrad montiert ist, umfasst,
der vordere Rahmenteil eine obere Stange (10), eine Sattelstange (5) und eine Querstange (11) umfasst,
der hintere Rahmenteil mindestens eine Sattelstrebe (8), mindestens eine untere Stange (9) und die Sattelstange (5) umfasst,
und wobei
die Querstange (11) eine obere Querstütze (14) und eine untere Querstütze (15) umfasst,
die untere Querstütze (15), die obere Querstütze (14), die obere Stange (10) und die Sattelstange (5) in dieser Reihenfolge durch Gelenke (P1, P2, P3, P4) miteinander so verbunden sind, dass ein gelenkiges Viereck (D) gebildet wird, das in eine zusammengeklappte Position und in eine aufgeklappte Position überführbar ist,
das gelenkige Viereck (D) so konfiguriert ist, dass sich das Fahrrad beim Überführen in seine zusammengeklappte Position in Längsrichtung faltet, wobei sich das Vorderrad und das Hinterrad beim Annähern in der Längsrichtung quer voneinander entfernen, bis das Vorderrad (1) in Querrichtung des Fahrrads dem Hinterrad (2) überlagert ist, und
die Gelenke (P1, P2, P3, P4) Schwenkglieder sind, deren Achsen (I1, I2, I3, I4) sich an einer selben Stelle schneiden.

2. Klappfahrrad mit einem Vorderrad (1), einem Hinterrad (2) und einem Rahmen, wobei
der Rahmen einen vorderen Rahmenteil, an dem das Vorderrad über eine Schwenkgabel (7) montiert ist, und einen hinteren Rahmenteil (A), an dem das Hinterrad montiert ist, umfasst,
der hintere Rahmenteil mindestens eine Sattelstrebe (8), mindestens eine untere Stange (9) und eine Sattelstange (5) umfasst,
und wobei
der vordere Rahmenteil eine obere Stange (10), einen oberen Abschnitt (5A) der Sattelstange (5), eine Verbindungsstange (30) und eine Querstange (11) umfasst,
die obere Stange (10), der obere Abschnitt (5A) der Sattelstange (5), die Verbindungsstange (30) und die Querstange (11) in dieser Reihenfolge durch Gelenke (P1, P2, P3, P4) miteinander so verbunden sind, dass ein gelenkiges Viereck (D) gebildet wird, das in eine zusammengeklappte Position und in eine aufgeklappte Position überführbar ist,
das überführbare gelenkige Viereck (D) so konfiguriert ist, dass sich das Fahrrad beim Überführen in seine zusammengeklappte Position in Längsrichtung faltet, wobei sich das Vorderrad und das Hinterrad beim Annähern in der Längsrichtung quer voneinander entfernen, bis das Vorderrad (1) in Querrichtung des Fahrrads dem Hinterrad (2) überlagert ist, und
die Gelenke (P1, P2, P3, P4) Schwenkglieder sind, deren Achsen (I1, I2, I3, I4) sich an einer selben Stelle schneiden.

3. Klappfahrrad nach Anspruch 1 oder 2, wobei die Gelenke (P1, P2, P3, P4) Schwenkglieder sind, deren Achsen (I1, I2, I3, I4) zu einer Stelle (S) gerichtet sind, welche quer von der Mittelebene des Fahrrads entfernt ist.

4. Klappfahrrad nach einem der Ansprüche 1 bis 3, wobei das hintere Rahmenteil (A) nicht überführbar ist.

5. Klappfahrrad nach einem der Ansprüche 1 bis 4, umfassend ein Verriegelungssystem zum Verriegeln des gelenkigen Vierecks (D) in seiner aufgeklappten Position.

6. Klappfahrrad nach Anspruch 5, wobei das Verriegelungssystem zwischen der unteren Querstütze (15) und der oberen Querstütze (14) oder zwischen dem oberen Abschnitt (5A) der Sattelstange und der Verbindungsstange (30) vorgesehen ist.

7. Klappfahrrad nach Anspruch 5 oder 6, wobei das Verriegelungssystem umfasst:
einen Bolzen (21), der im Inneren einer der Querstützen (15) zwischen einer ausgefahrenen Position und einer eingefahrenen Position verschiebbar montiert ist;
einen Halter (23), der im Inneren der andere Querstütze (14) untergebracht ist und mit dem Bolzen (21) in der ausgefahrenen Position zusammenarbeitet, um die relative Drehung der Querstützen (14, 15) um das Gelenk (P4) zu verhindern.

8. Klappfahrrad nach Anspruch 7, wobei die eine der Querstützen (15) eine Verlängerung (15a) aufweist, die sich axial über das Gelenk (P4) hinaus erstreckt, während die andere Stütze (14) einen Ausschnitt (14a) aufweist, dessen Form zu der der Verlängerung (15a) komplementär ist, und wobei der Bolzen (21) axial im Inneren der Verlängerung (15a) verschiebbar ist.

9. Klappfahrrad nach Anspruch 7 oder 8, wobei das Verriegelungssystem einen Entriegelungshebel (24) umfasst, der an derselben Querstütze (15) wie der Bolzen (21) montiert ist und mit dem Bolzen (21) zusammenarbeitet, um diesen in seine eingefahrene Position bringen und so die Drehung der Querstützen (14, 15) relativ zueinander ermöglichen.

10. Klappfahrrad nach Anspruch 8 oder 9, umfassend einen Riegel (27), der in der Verlängerung (15a) zwischen einer blockierten Position des Bolzens (21) und einer freigegebenen Position des Bolzens (21) bewegbar montiert ist, wobei der Riegel (27) seitlich, aber nicht axial translatierbar ist, wobei ein Stift (50) gegenüber dem Riegel (27) an einer Seitenfläche des Ausschnitts (14a) so vorgesehen ist, dass der Stift (50) auf den Riegel (27) drückt, um den Bolzen (21) zu lösen, wenn die Querstützen (14, 15) zum Ausrichten aufgeklappt sind.

11. Klappfahrrad nach einem der Ansprüche 1 bis 10, umfassend ein Blockiersystem zum Blockieren der Kurbelgarnitur des Fahrrads in einer bestimmten Position während des Zusammenklappens oder Aufklappens des Fahrrads.

12. Klappfahrrad nach Anspruch 11, wobei die Kurbelgarnitur eine Kurbelplatte (17) aufweist, die sich um eine Achse (A17) dreht, und wobei das Blockiersystem umfasst:
einen Stift (32), der an der unteren Querstütze (15) nahe der Platte (17) befestigt ist; und
einen Anschlag (33), der an der Innenseite der Platte (17) befestigt ist,
wobei der Stift so positioniert ist, dass er in der aufgeklappten Position den Lauf des Anschlags (33) nicht stört, so dass sich die Platte (17) frei um ihre Achse (A17) drehen kann, und beim Zusammenklappen, wenn die untere Querstütze (15) auf die Sattelstange (5) schwenkt und sich dieser nähert, der Stift (32) sich der Achse (A17) der Platte (17) nähert und den Lauf des Anschlags (33) so schneidet, dass sich die Platte (17) nicht mehr frei drehen kann.

13. Klappfahrrad nach einem der Ansprüche 1 bis 12, wobei die Stützen und Stagen im Wesentlichen gerade, gekrümmt oder in Form von gestrichelten Linien sind.

## Claims

1. A folding bicycle comprising a front wheel (1), a rear wheel (2) and a frame wherein,
the frame comprises a front frame portion on which the front wheel is mounted, via a pivoting fork (7), and a rear frame portion (A) on which the rear wheel is mounted,
the front frame portion comprises an upper bar (10), a seat bar (5) and an oblique bar (11),
the rear frame portion comprises at least one seat stay (8), at least one lower bar (9) and the seat bar (5), and wherein,
the oblique bar (11) comprises an upper oblique rod (14) and a lower oblique rod (15),
the lower oblique rod (15), the upper oblique rod (14), the upper bar (10) and the seat bar (5) are interconnected by joints (P1, P2, P3, P4), in this order, so as to form an articulated quadrilateral (D) deformable between a folded position and an unfolded position,
the articulated quadrilateral (D) is configured in such a way that, when deforming towards its folded position, the bicycle folds in the longitudinal direction, the front and rear wheels move transversely away from each other while moving towards each other in the longitudinal direction until the front wheel (1) comes to overlap with the rear wheel (2) in a transverse direction of the bicycle, and
the joints (P1, P2, P3, P4) are revolute joints and axes (11, 12, 13, 14) of these joints intersect at a same point.

2. A folding bicycle comprising a front wheel (1), a rear wheel (2) and a frame wherein,
the frame comprises a front frame portion on which the front wheel is mounted, via a pivoting fork (7), and a rear frame portion (A) on which the rear wheel is mounted,
the rear frame portion comprises at least one seat stay (8), at least one lower bar (9) and a seat bar (5),
and wherein,
the front frame portion comprises an upper bar (10), a upper portion (5A) of the seat bar (5), a connecting bar (30) and an oblique bar (11),
the upper bar (10), the upper portion (5A) of the seat bar (5), the connecting bar (30) and the oblique bar (11) are interconnected by joints (P1, P2, P3, P4), in this order, so as to form an articulated quadrilateral (D) deformable between a folded position and an unfolded position,
the deformable articulated quadrilateral (D) is configured in such a way that, when deforming towards its folded position, the bicycle folds in the longitudinal direction, the front and rear wheels move transversely away from each other while moving towards each other in the longitudinal direction until the front wheel (1) comes to overlap with the rear wheel (2) in a transverse direction of the bicycle, and
the joints (P1, P2, P3, P4) are revolute joints and axes (11, 12, 13, 14) of these joints intersect at a same point.

3. The folding bicycle according to claim 1 or 2, wherein the joints (P1, P2, P3, P4) are revolute joints and axes (11, 12, 13, 14) of these joints converge at a point (S) which is located transversely away from the median plane of the bicycle

4. The folding bicycle according to any one of claims 1 to 3, wherein the rear frame portion (A) is non-deformable.

5. The folding bicycle according to any of claims 1 to 4, comprising a locking system to lock the articulated quadrilateral (D) in its unfolded position.

6. The folding bicycle according to claim 5, wherein the locking system is provided between the lower oblique rod (15) and the upper oblique rod (14), or between the upper portion (5A) of the seat bar and the connecting bar (30).

7. The folding bicycle according to claim 5 or 6, wherein the locking system comprises:
a bolt (21) slidably mounted inside one of the oblique rods (15) between an extended position and a retracted position;
a keeper (23) fitted inside the other oblique rod (14) and cooperating with the bolt (21) in the extended position to prevent relative rotation of the oblique rods (14, 15) around the joint (P4).

8. The folding bicycle according to claim 7, wherein one of the oblique rods (15) has an extension (15a) extending axially beyond the joint (P4), while the other rod (14) has a cut-out (14a) whose shape is complementary to that of the extension (15a), and wherein the bolt (21) slides axially inside the extension (15a).

9. The folding bicycle according to claim 7 or 8, wherein the locking system comprises an unlocking lever (24) mounted on the same oblique rod (15) as the bolt (21) and cooperating with the bolt (21) for moving the latter towards its retracted position and thus allowing rotation of the oblique rods (14, 15) relative to each other.

10. The folding bicycle according to claim 8 or 9, comprising a latch (27) movably mounted in said extension (15a) between a bolt (21) locking position and a bolt (21) release position, the latch (27) being movable in translation laterally but not axially, wherein a pin (50) is provided facing the latch (27), on a side face of the cut-out (14a), so that the pin (50) comes to bear on the latch (27) to unlock the bolt (21) when the oblique rods (14, 15) are unfolded to be aligned.

11. The folding bicycle according to any of claims 1 to 10 comprising a locking system to lock the bicycle chain set in a particular position when folding or unfolding the bicycle.

12. The folding bicycle according to claim 11, wherein the chain set comprises a pedal plate (17) rotating about an axis (A17) and wherein the locking system comprises:
a pin (32) fixed on the lower oblique rod (15) near the plate (17); and
a stop (33) fixed on an inner face of the plate (17),
wherein the pin is positioned to, in the unfolded position, not interfere with the travel of the stop (33) so that the plate (17) can rotate freely about its axis (A17) and, when folded, when the lower oblique rod (15) pivots relative to the seat bar (5) and approaches it, the pin (32) approaches the axis (A17) of the plate (17) and cuts the travel of the stop (33) so that the plate (17) cannot rotate freely.

13. The folding bicycle according to any of claims 1 to 12, wherein the bars and rods are substantially straight, curved or have a broken line shape.
